# EUROPÄISCHE PATENTSCHRIFT

(11) **EP 1 348 899 B1**
(45) Veröffentlichungstag und Bekanntmachung des Hinweises auf die Patenterteilung: **11.01.2006**
(21) Anmeldenummer: 03006778.9
(22) Anmeldetag: 26.03.2003
(51) Int. Cl.: F16K 1/12

(54) **Coaxialventil**
Coaxial valve
Soupape coaxiale

(30) Priorität: 28.03.2002 DE 10214683
(43) Veröffentlichungstag der Anmeldung: 01.10.2003
(73) Patentinhaber: müller co-ax ag, 74670 Forchtenberg (DE)
(72) Erfinder: Menz, Friedrich, 74670 Forchtenberg (DE)
(74) Vertreter: Patentanwälte Ruff, Wilhelm, Beier, Dauster & Partner

(56) Entgegenhaltungen:
- EP-A- 0 816 747
- FR-A- 1 280 679
- US-A- 4 116 212

## Beschreibung

Die Erfindung geht aus von einem Coaxialventil. Coaxialventile werden in Leitungssysteme eingesetzt. Zur Verbindung mit dem Leitungssystem enthalten sie häufig in ihrem axialen Endbereich jeweils einen Flansch, der mit durchgehenden Löchern versehen ist. Die Anordnung dieser Löcher entspricht einer Norm. Diese Flansche werden mit den Endflanschen der Leitungssysteme mit Hilfe von Schrauben und Muttern verschraubt. Daher sind die bekannten zum Einsetzen in Leitungssysteme bestimmten Coaxialventile relativ lang und infolgedessen auch schwer.

Coaxialventile enthalten einen Ventilschließkörper, der als Rohr mit einem in einer Ebene liegenden Ende ausgebildet ist. Dieses Ende liegt auf einem quer zur Längsachse des Rohrs verlaufenden Ventilsitz auf. Im geöffneten Zustand wird dieses Rohr axial durchströmt. Es enthält eine geschlossene Mantelfläche. Die bekannten Coaxialventile weisen ein Gehäuse auf, das aus mehreren Teilen zusammengesetzt ist, die in axialer Richtung auseinander genommen und zusammengesetzt werden müssen. Zum Zusammenhalten der verschiedenen Teile des Gehäuses dienen häufig Gewindestangen, die das Gehäuse an der Außenseite umgeben.

Es ist bereits ein Koaxialventil bekannt (EP0816747), bei dem ein rohrartiges Gehäuse an seiner einen Stirnseite offen ist. In dem Gehäuse wird ein rohrförmiger Ventilschließkörper angeordnet. Er ist in dem Gehäuse selbst sowie an einem in die Stirnseite einsetzbaren Abschlusselement gelagert.

Bei einem weiteren Koaxialventil dieser Art (FR 1280679) ist der Ventilschließkörper ebenfalls an der Innenwand des Gehäuses gelagert. Eine zusätzliche Lagerung wird durch ein Abschlusselement bewirkt, das in den Ventilschließkörper von innen eingreift.

Der Erfindung liegt die Aufgabe zu Grunde, ein Coaxialventil zu schaffen, das einen einfacheren Material sparenden und Platz sparenden Aufbau aufweist. Darüber hinaus soll es ebenfalls in Leitungssysteme einsetzbar sein und eine kurze Baulänge aufweisen.

Zur Lösung dieser Aufgabe schlägt die Erfindung ein Coaxialventil mit den im Anspruch 1 genannten Merkmalen vor. Weiterbildungen der Erfindung sind Gegenstand von Unteransprüchen.

Das Gehäuse des von der Erfindung vorgeschlagenen Coaxialventils kann einstückig ausgebildet sein. Es weist etwa die Form einer zylindrischen Buchse auf, die an mindestens einem Ende eine offene Stirnseite aufweist. Die offene Stirnseite kann so ausgebildet sein, dass der zylindrische Innenraum einfach nach außen sich öffnet. Der Innenraum kann auch abgestuft zylindrisch sein. Es ist auch denkbar, dem Innenraum eine von einer Zylinderform abweichende Gestalt zu geben. Eine Zerlegung des Gehäuses in axialer Richtung ist nicht mehr erforderlich, da der Ventilschließkörper durch eine axial offene Stirnseite in den Innenraum eingesetzt werden kann. Dadurch erübrigen sich alle Teile, die zum Zusammenfügen des Gehäuses bislang erforderlich waren.

Erfindungsgemäß kann vorgesehen sein, dass beide Stirnseiten des Gehäuses offen und durch je einen Deckel abdeckbar sind. So ist es möglich, beispielsweise den Ventilschließkörper von der einen Seite in den Innenraum des Gehäuses einzusetzen, und andere mit diesem zusammenwirkende Teile von der anderen Stirnseite her.

Es ist jedoch ebenfalls möglich und wird von der Erfindung vorgeschlagen, dass nur eine der beiden Stirnseiten in der beschriebenen Weise offen ist, während die andere Stirnseite beispielsweise nur eine Durchströmöffnung aufweist,durch die im Betrieb das von dem Ventil geschaltete Fluid hindurch strömen kann. Diese Durchströmöffnung kann einen Durchmesser aufweisen, der deutlich kleiner ist als der Durchmesser des Innenraums des Gehäuses. Diese Öffnung wird eben nicht dazu benötigt, Teile in den Innenraum des Gehäuses einzusetzen.

Es ist natürlich auch denkbar, dass eine Stirnseite des Gehäuses vollständig geschlossen ist, wenn ein Anschluss an einer anderen Stelle des Gehäuses vorhanden ist.

In Weiterbildung der Erfindung kann vorgesehen sein, dass auch der mindestens eine Ventilsitz, der mit dem Ventilschließkörper zusammen wirken soll, als Einsatz ausgebildet ist, der durch eine offene Stirnseite in den Innenraum eingesetzt ist. Beispielsweise kann der Ventilsitz zunächst in den Innenraum eingesetzt werden und anschließend der Ventilschließkörper durch die gleiche Öffnung.

Es wird von der Erfindung vorgeschlagen, dass die Lagerung mindestens teilweise durch einen Einsatz ermöglicht bzw. bewirkt wird, der ebenfalls in den Innenraum des Ventilgehäuses durch eine offene Stirnseite eingesetzt wird. Insbesondere kann vorgesehen sein, dass ein Teil der Lagerung des Ventilschließkörpers durch den Deckel gebildet wird.

Bei dem Antriebssystem, mit dessen Hilfe der Ventilschließkörper von dem Ventilsitz abgehoben und auf diesen abgesenkt wird, kann es sich um ein übliches, bei Coaxialventilen verwendetes Antriebssystem handeln. Insbesondere kann vorgesehen sein, dass das Antriebssystem in dem Zwischenraum zwischen dem Ventilschließkörper und dem Gehäuse angeordnet wird. Da der Ventilschließkörper als Rohr insbesondere koaxial zu dem Innenraum des Gehäuses gelagert wird, entsteht hier ein ringförmiger Zwischenraum, der für ein Antriebssystem verwendet werden kann. Beispielsweise kann es sich dabei um eine Kolbenzylinderanordnung handeln, bei der also der Ventilschließkörper durch Einbringen von Druckmittel in einen Zylinderraum bewegt wird. Selbstverständlich ist es auch möglich, einen magnetischen Antrieb zu verwenden, der ebenfalls in dem erwähnten Zwischenraum angebracht werden kann. Auch das Antriebssystem kann in Weiterbildung der Erfindung durch die offene Stirnseite in das Gehäuse eingebracht werden.

Die Energiezufuhr für das Antriebssystem, also beispielsweise das Druckmittel, kann erfindungsgemäß durch die Wand des Gehäuses erfolgen, insbesondere in radialer Richtung durch dort verlaufende Bohrungen.

Die Kolbenzylinderanordnung, die bereits erwähnt wurde, kann beispielsweise dadurch gebildet werden, dass an der Außenseite des Ventilschließkörpers eine Rippe vorhanden ist, die den Kolben eines solchen Systems bildet. Dieser Kolben kann in einen Einsatz eingreifen, der den Zylinder bildet.

Wie bereits erwähnt wurde, enthält das Coaxialventil mindestens zwei Anschlüsse, um es in ein Leitungssystem einzusetzen. Erfindungsgemäß kann mindestens ein Anschluss an einer Stirnseite angeordnet sein. Es ist aber ebenfalls möglich und liegt im Rahmen der Erfindung, dass auch ein Anschluss an einer Mantelfläche des Gehäuses angeordnet wird. Dies gilt insbesondere dann, wenn das Ventil als Dreiwegeventil ausgebildet ist, also einen Einlass und zwei Auslassanschlüsse aufweist.

Zur Verbindung des Ventilgehäuses mit den Leitungssystemen, auch mit bestehenden Leitungssystemen, kann es in seiner Stirnfläche, oder auch in seiner Mantelfläche, eine Reihe von mit Gewinde versehenen Sacklöchern aufweisen. Die Anordnung dieser mit Gewinde versehenen Sacklöcher kann so gestaltet werden, wie dies der üblichen Anordnung bei den zum Stand der Technik gehörenden Ventilen entspricht. Die Flansche der Leitungssysteme können dann mit in die Gewindebohrungen eingreifenden Schrauben mit dem Gehäuse verbunden werden. Es wird auf diese Weise auch sichergestellt, dass die für die feste Verbindung vorgesehenen korrekten Schrauben verwendet werden.

Da das Gehäuse im wesentlichen einstückig ausgebildet sein kann, natürlich mit Ausnahme des Deckels, kann es eine glatte Außenfläche aufweisen, die allenfalls von einem Anschlussblock für das Druckmittel unterbrochen ist.

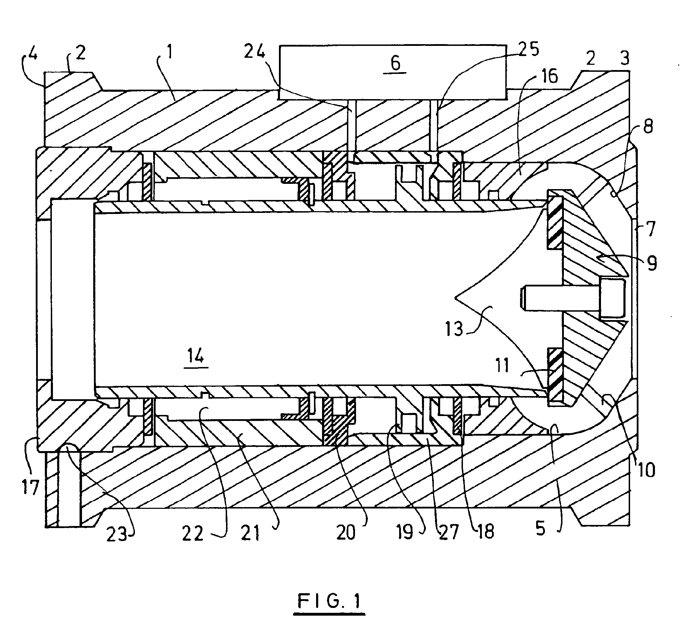

Weitere Merkmale, Einzelheiten und Vorzüge der Erfindung ergeben sich aus der folgenden Beschreibung bevorzugter Ausführungsformen der Erfindung, den Patentansprüchen und der Zusammenfassung, deren Wortlaut durch Bezugnahme zum Inhalt der Beschreibung gemacht wird, sowie anhand der Zeichnung. Hierbei zeigen:
Figur 1
   einen schematischen Längsschnitt durch ein erfindungsgemäßes Coaxialventil in geschlossenem Zustand;
Figur 2
   eine Stirnansicht des Coaxialventils der Figur 1 von links in Figur 1, teilweise geschnitten;
Figur 3
   einen Teilaxialschnitt durch ein Coaxialventil nach einer zweiten Ausführungsform.
Figur 4
   Einen Teilschnitt durch eine geänderte Ausführungsform.

Das in Figur 1 schematisch im Schnitt dargestellte Coaxialventil enthält ein Ventilgehäuse 1, das etwa die Form eines Zylinders aufweist. Im Bereich seiner beiden axialen Enden ist der Außendurchmesser etwas vergrößert, zur Bildung eines umlaufenden Vorsprungs 2. Dieses Gehäuse 1 hat dadurch zwei parallel zueinander verlaufende Stirnseiten mit Stirnflächen 3, 4. Im Inneren des Gehäuses 1 ist ein Innenraum 5 gebildet, der zur Unterbringung der Funktionsteile des Ventils dient. Zum Ansteuern des Ventils dient beispielsweise ein Druckmittelfluid, 8 das mit Hilfe eines Anschlussblocks 6 in den Innenraum eingebracht werden kann. Der Anschlussblock 6 ist an einer Stelle der Mantelfläche angebracht, beispielsweise festgeschraubt. Dies wird im Einzelnen nicht dargestellt.

Im Bereich des in Figur 1 rechten Endes geht der Innenraum in eine Durchströmöffnung 7 über, deren Durchmesser deutlich kleiner ist als der Durchmesser des Innenraums 5 in seinem sonstigen Bereich. Die Innenwand 8 bildet eine geschwungene Form, zur Verbesserung des Ausströmens des Fluids, das durch das Ventil geschaltet werden soll.

Im Innenraum 5 des Ventilgehäuses ist, wenn man an der rechten Seite beginnt, ein Ventilsitz 9 untergebracht, der als Einsatz ausgebildet ist. Der Ventilsitz 9 stützt sich beispielsweise mit Hilfe von Stegen 10 an der Innenwand des Gehäuses ab. Er enthält ein aus Elastomermaterial bestehendes Ringelement 11, das den eigentlichen Ventilsitz bildet. An dem Ventilsitz 9 kann mit Hilfe einer Schraube 12 ein Strömungsführungskörper 13 festgeschraubt sein.

Mit dem Ventilsitzelement 9 wirkt ein Ventilschließkörper 14 zusammen, der als durchströmtes Rohr ausgebildet ist. In geschlossenem Zustand des Ventils liegt die scharf ausgebildete Steuerkante 15 des Rohrs auf dem elastomeren Ring 11 auf. Das Rohr ist zur Außenseite hin durch verschiedene Dichteinrichtungen abgedichtet, die im Einzelnen nicht dargestellt sind. Es ist innerhalb des Gehäuses 1 in axialer Richtung verschiebbar gelagert. Zur Lagerung dient beispielsweise ein Lagerungsring 16, der im Bereich des Ventilsitzelements 9 angeordnet ist und an der Innenwand 8 des Innenraums 5 anliegt. Am gegenüberliegenden, in Figur 1 also linken Ende, ist der Ventilschließkörper 14 durch einen rippenartigen Vorsprung an der Innenseite eines Deckels 17 gelagert. Dieser Deckel wird im Folgenden noch beschrieben werden.

Nach dem Lagerungsring 16 wird in den Innenraum ein Zylinderelement 27 eingeschoben, das das Profil etwa eines L aufweist. Zwischen dem Lagerungsring 16 und dem Zylinderelement 27 ist noch eine flache Scheibe 18 eingelegt.

Anschließend wird in den Innenraum der Ventilschließkörper 14 eingeschoben, der an seiner Außenseite einen umlaufenden einen Kolben bildenden Vorsprung 19 aufweist. Dieser Vorsprung 19 liegt, unterstützt durch eine nicht dargestellte Dichtung, an der Innenseite des Zylinderelements 27 an.

Anschließend wird auf den Zylinder 27 eine Dichtscheibe 20 aufgeschoben, die damit zusammen mit dem Zylinderelement 27 und dem Vorsprung 19 die Antriebseinheit für den Ventilschließkörper 14 bildet.

Auf die Dichtscheibe 20 folgt ein Zwischenstück 21, das an der Innenwand des Innenraums 5 anliegt und an seiner Innenseite einen ringförmigen Zwischenraum 22 zwischen dem Ventilschließkörper 14 und sich selbst bildet. In diesem Innenraum 22 wird eine Druckfeder untergebracht, die beispielsweise den Ventilschließkörper 14 in Richtung auf den Ventilsitz 9 beaufschlagt.

Der Innenraum wird dann durch den bereits erwähnten Deckel 17 abgeschlossen, der von der offenen linken Stirnseite 4 her in den Innenraum eingeschoben wird. Zur Sicherung in der korrekten axialen Positionen kann eine Madenschraube dienen, die in eine ringförmige im Querschnitt etwa U-förmige Nut 23 eingreift.

Der Ventilschließkörper 14 wird dadurch betätigt, dass durch zwei radial verlaufende Bohrungen 24, 25 über den Anschlussblock 6 Druckmittel auf eine der beiden Seiten des den Kolben bildenden Vorsprungs 19 gebracht wird.

Das Ventil wird in der beschriebenen Weise zusammengesetzt. Es ist sehr einfach aufgebaut, da sein Gehäuse im dargestellten Ausführungsbeispiel einstückig ausgebildet ist. Es wäre auch denkbar, das Gehäuse mit einem vollständig durchgehenden Innenraum zu versehen, der auf der rechten Seite ebenfalls ein Einsetzen von Teilen des Ventils in den Innenraum ermöglichen würde. Dann könnte das Ventil auf beiden Seiten durch einen Deckel abgeschlossen sein. Durch den sehr einfachen Aufbau verringern sich die Herstellungskosten des Ventils. Darüber hinaus ist es auch sehr kurz aufgebaut, da seine tatsächliche Länge kaum größer ist als die Länge des Ventilschließkörpers. Darüber hinaus wird nur wenig Material benötigt, was ebenfalls zur Verringerung der Kosten auf Grund des geringeren Materialverbrauchs und des geringeren Gewichts führt.

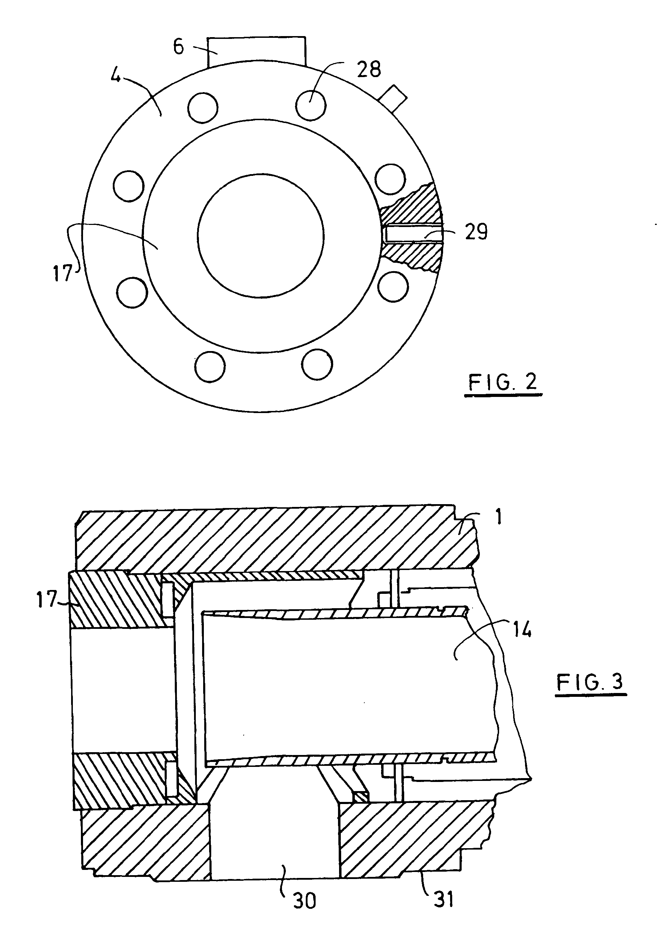

Zum Einschrauben des in Figur 1 dargestellten Ventils in Leitungssysteme, die Rohrverbindungen mit Flanschen enthalten, dienen in den Stirnflächen 3, 4 des Gehäuses vorhandene mit Gewinden versehene Sacklöcher. Hierzu wird auf Figur 2 verwiesen. Figur 2 zeigt eine Stirnansicht des Ventils von links in Figur 1. Die erwähnte Stirnfläche 4 enthält acht Sacklöcher 28, die auf einem Kreis gleichmäßig verteilt angeordnet sind. Das Bohrungsbild dieser Sacklöcher 28 entspricht dem Bohrungsbild der Flansche der Leitungssysteme und auch der vorhandenen zum Stand der Technik gehörenden Ventilen dieser Art. Zur Verbindung mit dem Leitungssystem werden Schrauben durch die Löcher der Flansche hindurch in die mit einem Gewinde versehenen Sacklöcher 28 des Ventils eingeschraubt.

Rechts in Figur 2 ist in dem geschnitten dargestellten Teil eine Gewindebohrung 29 zu sehen, durch die hindurch eine Madenschraube geschraubt werden kann, die dann in die Nut 23 eingreift.

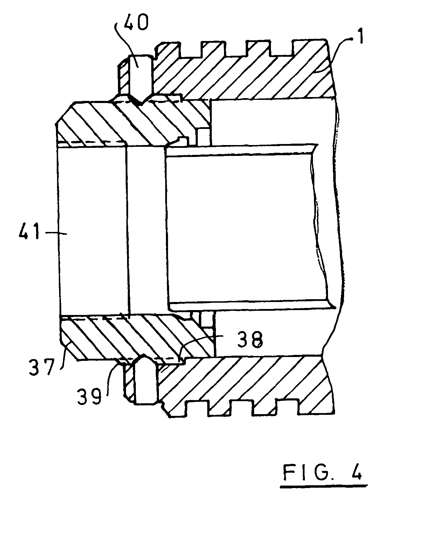

Während bei dem Ventil der Figur 1 und 2 die Leitungsanschlüsse an beiden Stirnseiten 3, 4 angebracht sind, zeigt Figur 3 eine Möglichkeit, wie ein solches Ventil als Dreiwegeventil ausgebildet sein kann. Hierzu ist ein seitlicher Anschluss 30 vorhanden, der rings um den Anschluss eine Stirnfläche 31 enthält. Diese Stirnfläche liegt ebenfalls in einer Ebene und enthält Gewindebohrungen 28 wie die beiden axialen Stirnflächen 3, 4 bei der Ausführungsform nach Figur 1.

Figur 4 zeigt eine in zwei Punkten abgeänderte Ausführungsform. Der Deckel 37 ist bei dieser Ausführungsform nicht nur in das Ende eingesteckt, sondern eingeschraubt. Hierzu weist das Ventilgehäuse 1 im Endbereich ein Innengewinde 38 auf, in das ein entsprechendes Außengewinde 39 des Deckels 37 eingreift. Zur Sicherung im eingeschraubten Zustand dienen mehrere über den Umfang verteilte Madenschrauben 40.

Zur Verbindung mit einem Leitungssystem dient bei diesem Ventil kein Flansch, der in die Stirnfläche eingeschraubt wird. Stattdessen enthält der Deckel 37 einen Anschluss mit einem Innengewinde 41, in das das entsprechende Leitungsende eingeschraubt wird.

Auf der gegenüberliegenden Stirnseite, die aus Gründen der Vereinfachung nicht dargestellt ist, kann das Ventil ebenfalls ein solches Innengewinde 41 aufweisen. Natürlich sind auch Kombinationen möglich, bei denen auf der einen Seite die Anschlussmöglichkeit für einen Flansch und auf der anderen Seite die Anschlussmöglichkeit mit einem Gewindestutzen gegeben ist.

## Patentansprüche

1. Coaxialventil, mit
1.1 einem zylindrischen mindestens einen Eingangsanschluss und einen Ausgangsanschluss aufweisenden Gehäuse (1), das
1.1.1 mindestens eine offene den Zugang in seinen Innenraum (5) freigebende Stirnseite (4) und
1.1.2 einen die offene Stirnseite (4) abdeckenden mit dem Gehäuse (1) verbindbaren Deckel (17) aufweist,
1.2 mindestens einem in dem Innenraum (5) angeordneten Ventilsitz (9) sowie
1.3 einem mit dem Ventilsitz (9) zusammenwirkenden als durchströmtes Rohr ausgebildeten Ventilschließkörper (14), der
1.3.1 durch die geöffnete Stirnseite (4) in den Innenraum (5) des Gehäuses (1) eingesetzt ist,
**gekennzeichnet durch**
1.4 eine die Verschiebbarkeit des Ventilschließkörpers (14) ermöglichende Lagerung, die
1.4.1 als Einsatz ausgebildet
1.4.2 an der Innenwand (8) des Gehäuses (1) anliegt und
1.4.3 in den Innenraum (5) des Gehäuses (1) **durch** die offene Stirnseite (4) eingesetzt ist.

2. Coaxialventil nach Anspruch 1, bei dem beide Stirnseiten (3, 4) des Gehäuses (1) offen und durch je einen Deckel (17) abdeckbar sind.

3. Coaxialventil nach Anspruch 1, bei dem nur eine der beiden Stirnseiten (4) offen ist und die andere eine Durchströmöffnung (7) aufweist, deren Durchmesser kleiner als der Durchmesser des Innenraums (5) des Gehäuses (1) ist.

4. Coaxialventil nach einem der vorhergehenden Ansprüche, bei dem mindestens ein Ventilsitz (9) als Einsatz ausgebildet ist, der durch eine offene Stirnseite (4) in den Innenraum (5) des Gehäuses (1) eingesetzt ist.

5. Coaxialventil nach einem der vorhergehenden Ansprüche, bei dem ein Teil der Lagerung des Ventilschließkörpers (14) durch den Deckel (17) gebildet wird.

6. Coaxialventil nach einem der vorhergehenden Ansprüche, mit einem in dem Zwischenraum zwischen dem Ventilschließkörper (14) und dem Gehäuse (1) angeordneten Antriebssystem.

7. Coaxialventil nach einem der vorhergehenden Ansprüche, bei dem das Antriebssystem eine Kolbenzylinderanordnung ist.

8. Coaxialventil nach einem der vorhergehenden Ansprüche, bei dem das Antriebssystem durch die offene Stirnseite (4) in das Gehäuse (1) eingesetzt ist.

9. Coaxialventil nach einem der vorhergehenden Ansprüche, bei dem eine Druckmittelzufuhr durch die Wand des Gehäuses (1) erfolgt, insbesondere in radialer Richtung.

10. Coaxialventil nach einem der vorhergehenden Ansprüche, bei dem mindestens ein Anschluss zur Verbindung des Gehäuses (1) mit einem Leitungssystem an einer Stirnseite (3, 4) des Gehäuses (1) angeordnet ist.

11. Coaxialventil nach einem der vorhergehenden Ansprüche, bei dem mindestens ein Anschluss zur Verbindung des Gehäuses (1) mit einem Leitungssystem an einer Mantelfläche des Gehäuses (1) angeordnet ist.

12. Coaxialventil nach einem der vorhergehenden Ansprüche, bei dem zur Verbindung des Gehäuses (1) mit einem Flansch eines Leitungssystems in einer Stirnfläche (3, 4, 31) des Gehäuses (1) mit Gewinde versehene Sacklöcher (28) vorhanden sind.

13. Coaxialventil nach Anspruch 12, bei dem die mit Gewinde versehenen Sacklöcher (28) in einer Anordnung vorhanden sind, die dem Bohrungsbild üblicher Flansche entspricht.

14. Coaxialventil nach einem der vorhergehenden Ansprüche, mit einer glatten Mantelfläche.

## Claims

1. A coaxial valve having
1.1 a cylindrical housing (1) having at least one inlet port and one exit port,
1.1.1 at least one open end (4) providing access to its interior (5),
1.1.2 a cap (17) that may be bound to the housing (1) and covers its open end (4),
1.2 at least one valve seat (9) arranged in its interior (5), and
1.3 a plunger (14) interacting with the valve seat (9) that is configured in the form of a length of tubing through which fluid may flow and
1.3.1 is inserted into the interior (5) of the housing (1) through its open end (4),
**characterized by**
1.4 a bearing that allows the plunger (14) to be slid back and forth that
1.4.1 is configured in the form of an insert
1.4.2 abuts against the inner wall (8) of the housing (1) and
1.4.3 is inserted into the interior (5) of the housing (1) through its open end (4).

2. A coaxial valve according to claim 1, where both ends (3, 4) of the housing (1) are open and either end thereof may be covered by a cap (17).

3. A coaxial valve according to claim 1, where just one of the two ends (4) is open and the other has an orifice (7) through which fluid may flow, whose diameter is less than the diameter of the interior (5) of the housing (1).

4. A coaxial valve according to any of the foregoing claims, where the at least one valve seat (9) is configured in the form of an insert that is inserted into the interior (5) of the housing (1) through an open end (4) thereof.

5. A coaxial valve according to any of the foregoing claims, where part of the bearing for the plunger (14) is formed by the cap (17).

6. A coaxial valve according to any of the foregoing claims having a drive system arranged in the space between the plunger (14) and the housing (1).

7. A coaxial valve according to any of the foregoing claims, where the drive system is a piston-cylinder arrangement.

8. A coaxial valve according to any of the foregoing claims, where the drive system is inserted into the housing (1) through its open end (4).

9. A coaxial valve according to any of the foregoing claims, where a pressurizing medium is fed in through the wall of the housing (1), in particular, is fed in radially.

10. A coaxial valve according to any of the foregoing claims, where at least one port for connecting the housing (1) to a line network is arranged on an end (3, 4) of the housing (1).

11. A coaxial valve according to any of the foregoing claims, where at least one port for connecting the housing (1) to a line network is arranged on a lateral surface of the housing (1).

12. A coaxial valve according to any of the foregoing claims, where tapped blind holes (28) for connecting the housing (1) to a flange of a line network are present on an end (3, 4, 31) of the housing (1).

13. A coaxial valve according to any of the foregoing claims, where the layout of the tapped blind holes (28) corresponds to the bolt circles on typical flanges.

14. A coaxial valve according to any of the foregoing claims having a smooth lateral surface.

## Revendications

1. Vanne coaxiale, avec
1.1. un boîtier (1) cylindrique comprenant au moins un raccord d'entrée et un raccord de sortie, comportant
1.1.1. au moins un front ouvert (4) donnant accès à son espace intérieur (5) et
1.1.2. un couvercle (17) recouvrant le front ouvert (4) pouvant être relié au boîtier (1),
1.2 au moins un siège de vanne (9) disposé dans l'espace intérieur (5) ainsi qu'un
1.3 obturateur de vanne (14) interagissant avec le siège de vanne (9) et constitué d'un tuyau d'écoulement qui
1.3.1 est inséré à travers le front ouvert (4) dans l'espace intérieur (5) du boîtier (1).
**caractérisé par**
1.4. un logement permettant le déplacement de l'obturateur de vanne (14), ledit logement étant
1.4.1. constitué d'un insert
1.4.2. appliqué à la paroi intérieure (8) du boîtier (1) et
1.4.3. inséré dans l'espace intérieur (5) du boîtier (1) à travers le front ouvert (4).

2. Vanne coaxiale selon la revendication 1, pour laquelle les deux fronts (3, 4) du boîtier (1) sont ouverts, chacun d'eux pouvant être recouvert d'un couvercle (17).

3. Vanne coaxiale selon la revendication 1, pour laquelle seul un des deux fronts (4) est ouvert et l'autre comporte une ouverture traversante (7) dont le diamètre est inférieur à celui de l'espace intérieur (5) du boîtier (1).

4. Vanne coaxiale selon l'une quelconque des revendications précédentes, pour laquelle au moins un siège de vanne (9) est constitué d'un insert, inséré dans l'espace intérieur (5) du boîtier (1) à travers un front ouvert (4).

5. Vanne coaxiale selon l'une quelconque des revendications précédentes, pour laquelle une partie du logement de l'obturateur de vanne (14) est formée par le couvercle (17).

6. Vanne coaxiale selon l'une quelconque des revendications précédentes, avec un système d'entraînement disposé dans l'espace intermédiaire entre l'obturateur de vanne (14) et le boîtier (1).

7. Vanne coaxiale selon l'une quelconque des revendications précédentes, pour laquelle le système d'entraînement est un dispositif de cylindre à piston.

8. Vanne coaxiale selon l'une quelconque des revendications précédentes, pour laquelle le système d'entraînement est inséré à travers le front ouvert (4) dans le boîtier (1).

9. Vanne coaxiale selon l'une quelconque des revendications précédentes, pour laquelle l'alimentation en moyen de pression a lieu à travers la paroi du boîtier (1), en particulier en direction radiale.

10. Vanne coaxiale selon l'une quelconque des revendications précédentes, pour laquelle au moins une liaison pour la jonction du boîtier (1) avec un système de conduite est disposée sur un front (3, 4) du boîtier (1).

11. Vanne coaxiale selon l'une quelconque des revendications précédentes, pour laquelle au moins une liaison pour la jonction du boîtier (1) avec un système de conduite est disposée sur une surface latérale du boîtier (1).

12. Vanne coaxiale selon l'une quelconque des revendications précédentes, pour laquelle, pour la jonction du boîtier (1) avec une bride d'un système de conduite, des trous borgnes (28) pourvus de filets sont ménagés dans une face frontale (3, 4, 31) du boîtier (1).

13. Vanne coaxiale selon la revendication 12, pour laquelle les trous borgnes (28) pourvus de filets sont disposés de la même manière que dans la bride usuelle.

14. Vanne coaxiale selon l'une quelconque des revendications précédentes, avec une surface latérale lisse.
